Europäisches Patentamt

(19) European Patent Office

Office européen des brevets

(11) Numéro de publication : **0 309 344 B1**

# (12) FASCICULE DE BREVET EUROPEEN

(45) Date de publication du fascicule du brevet :
08.05.91 Bulletin 91/19

(51) Int. Cl.⁵ : **B62D 1/16,** F16D 1/08,
    F16B 41/00

(21) Numéro de dépôt : 88402379.7

(22) Date de dépôt : 21.09.88

(54) Dispositif d'accouplement pour une colonne de direction et véhicule équipé d'un tel dispositif.

(30) Priorité : 24.09.87 FR 8713221

(43) Date de publication de la demande :
29.03.89 Bulletin 89/13

(45) Mention de la délivrance du brevet :
08.05.91 Bulletin 91/19

(84) Etats contractants désignés :
DE GB IT

(56) Documents cités :
FR-A- 2 067 783
FR-A- 2 500 544
US-A- 2 948 317
US-A- 4 628 758
PATENT ABSTRACTS OF JAPAN, vol. 9, no.
229 (M-413)[1952], 14 septembre 1985, page 60
M 413; & JP-A-60 85 058 (NIHON PURASUTO
K.K.) 14-05-1985

(73) Titulaire : AUTOMOBILES PEUGEOT
75, avenue de la Grande Armée
F-75116 Paris (FR)
Titulaire : AUTOMOBILES CITROEN
62 Boulevard Victor-Hugo
F-92200 Neuilly-sur-Seine (FR)

(72) Inventeur : Cailly, René
Résidence Allendé -Bt 3 Avenue de Stalingrad
F-93200 Saint Denis (FR)

(74) Mandataire : Durand, Yves Armand Louis et al
CABINET WEINSTEIN 20, Avenue de
Friedland
F-75008 Paris (FR)

## Description

La présente invention a essentiellement pour objet un dispositif d'accouplement pour une colonne de direction.

Elle vise également un véhicule d'un type quelconque équipé d'un tel dispositif.

On connaît déjà des dispositifs d'accouplement permettant l'assemblage de deux éléments et qui comportent une première pièce en forme d'arbre engageable dans une deuxième pièce en forme d'étrier.

Le blocage de l'arbre dans l'étrier est réalisé par l'intermédiaire d'un boulon disposé, et agissant sur les branches de l'étrier.

Afin d'obtenir un dispositif unitaire et pratique, on a proposé dans le document FR-A-2579 159 un dispositif dans lequel la vis du boulon peut être rendue solidaire de l'une des branches de l'étrier tandis que l'écrou est solidaire de l'autre branche.

Cependant, le montage de ces composants sur les branches de l'étrier présente généralement un jeu important et nécessite au cours de l'assemblage un ajustement de la vis sur l'écrou par l'utilisateur. Par ailleurs, pendant cet ajustement, l'arbre doit être maintenu par ce même utilisateur en fond d'étrier afin d'obtenir un alignement précis des éléments à assembler.

D'autre part, on a déjà décrit pour d'autres applications des moyens pour bloquer un élément fileté en position d'attente avant montage. Par exemple le document FR-A-2500 544 décrit un tel moyen consistant en une bague vissée sur l'élément fileté et positivement bloquée sur l'un des éléments à fixer, ladite bague étant ensuite débloquée lors du montage.

Toutefois, on ne connaît pas de dispositif d'accouplement pour une colonne de direction où le maintien de l'arbre dans l'étrier est assuré par la bague lors du vissage, de façon à réduire le nombre d'interventions manuelles.

Par conséquent, tous ces dispositifs connus écartent la possibilité d'utilisation d'un moyen de montage automatique tel qu'un robot.

Aussi, la présente invention a pour but de remédier à ces inconvénients en proposant un dispositif d'accouplement perfectionné, permettant un assemblage précis de deux éléments d'une colonne de direction, et assurant un alignement optimum de la vis et de l'écrou avant leur engagement afin d'autoriser l'utilisation d'un moyen de montage automatique tel qu'un robot.

A cet effet, l'invention a pour objet un dispositif d'accouplement de deux éléments d'une colonne de direction par exemple, qui comprend un arbre engageable dans une pièce en forme d'étrier dont les branches peuvent être serrées contre l'arbre à l'aide d'un boulon comportant un élément fileté formant vis solidaire de l'une des branches de l'étrier et un élément formant écrou solidaire de l'autre branche de l'étrier, ce dispositif se caractérisant en ce qu'il comporte en outre une bague vissée sur ledit élément fileté ainsi qu'un moyen d'immobilisation de ladite bague sur la branche de l'étrier qui porte l'élément fileté, ledit moyen d'immobilisation étant apte d'une part à bloquer positivement la bague sur ladite branche pour mettre ainsi l'élément fileté en position d'attente avant engagement de l'arbre dans l'étrier, et d'autre part à permettre le déblocage de ladite bague sous l'effet d'une poussée axiale exercée sur l'élément fileté, la bague présentant une forme sensiblement ovale en section transversale pour prendre appui, sous l'effet de la rotation de l'élément fileté, lors du vissage, contre l'arbre engagé dans l'étrier.

Suivant une autre caractéristique, la bague précitée est logée dans une pièce formant pontet solidaire de la branche de l'étrier portant l'élément fileté, et munie d'un moyen d'immobilisation de ladite bague.

On précisera encore ici que le moyen d'immobilisation est constitué par un ergot en matériau élastique agisssant par exemple par contact de pression sur la périphérie de la bague.

Selon encore une autre caractéristique de cette invention, la bague précitée est munie d'un frein en prise avec le filetage de l'élément fileté.

Mais d'autres caractéristiques et avantages de l'invention apparaîtront mieux dans la description détaillée qui suit et se réfère aux dessins annexés, donnés à titre d'exemple, et dans lesquels :

La figure 1 est une vue en coupe longitudinale d'un premier mode de réalisation du dispositif d'accouplement selon l'invention ;

La figure 2 est une vue de côté du dispositif représenté sur la figure 1 ;

La figure 3 est une section transversale faite suivant la ligne III-III de la figure 1, avant la phase de blocage ;

La figure 4 est une section transversale identique à la section transversale de la figure 3 mais représentant le dispositif d'accouplement selon l'invention après la phase de blocage ;

La figure 5 est une vue longitudinale d'un deuxième mode de réalisation du dispositif d'accouplement selon l'invention représentant une autre disposition de l'arbre et de l'étrier par rapport à la colonne de direction ;

La figure 6 est une vue de côté du dispositif représenté sur la figure 5 ;

La figure 7 est une section transversale faite suivant la ligne VII-VII de la figure 5 ;

La figure 8 est une vue en coupe longitudinale d'un troisième mode de réalisation du dispositif d'accouplement selon l'invention représentant entre autres une troisième disposition de l'arbre et de l'étrier sur la colonne de direction ;

La figure 9 est une section transversale faite suivant la ligne IX-IX de la figure 8 ; et

La figure 10 est une section transversale faite suivant la ligne X-X de la figure 8 et représentant plus particulièrement les extrémités évasées de l'étrier.

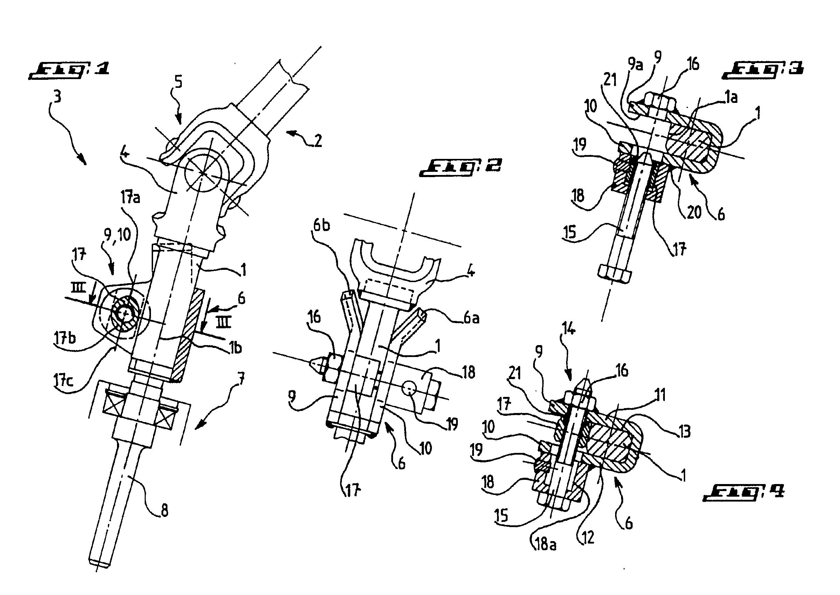

En se reportant à la figure 1, et suivant un premier mode de réalisation, un dispositif d'accouplement conforme à cette invention comprend un arbre 1 solidaire d'un élément supérieur 2 d'une colonne de direction 3, qui est ici la partie inférieure 4 d'un cardan 5.

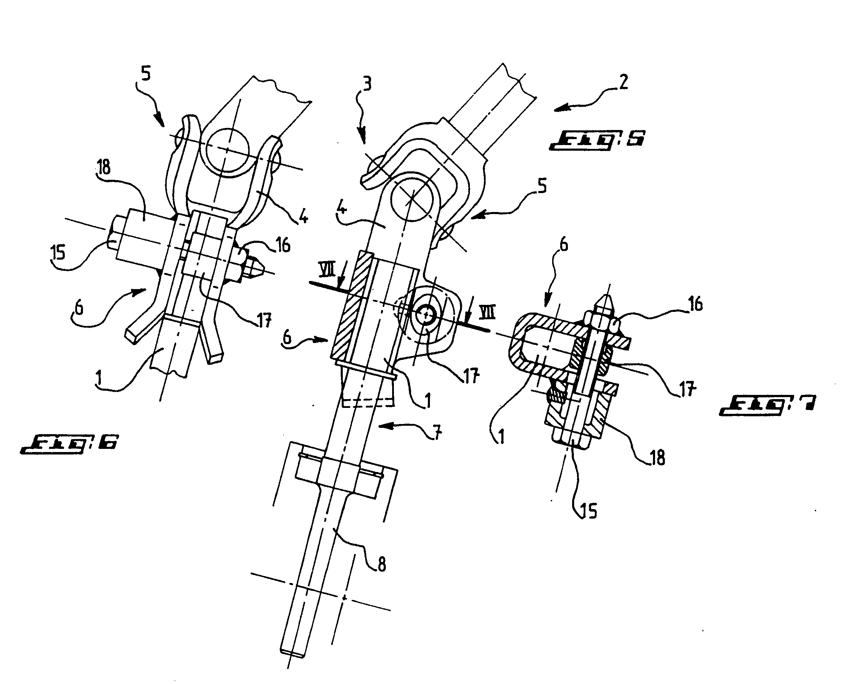

Cet arbre 1 est engageable dans une pièce 6 en forme d'étrier solidaire d'un élément inférieur 7 de la colonne de direction 3, qui est ici un pignon 8 représenté de façon simplifiée et engrenant avec une crémaillère, non représentée, d'un véhicule automobile. L'étrier 6 présente des extrémités 6a et 6b évasées disposées dans le prolongement de ses côtés 11 et 12 permettant un engagement plus facile de l'arbre 1 et visibles sur la figure 2.

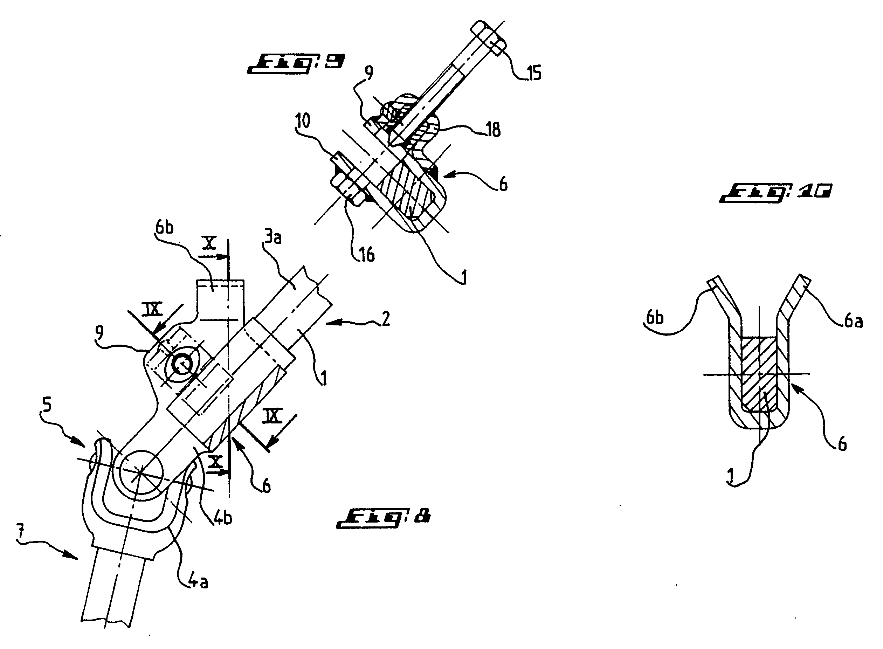

En se reportant aux figures 3 et 4, on remarque que la pièce en forme d'étrier 6 comporte deux branches 9 et 10 faisant saillie respectivement dans le prolongement des côtés 11 et 12 qui forment le logement 13 recevant l'arbre 1.

Ces branches comportent de façon transversale un boulon 14 destiné à les serrer l'une vers l'autre afin de bloquer l'arbre 1.

Ce boulon est constitué d'un premier élément fileté 15 formant vis solidaire de la branche 10 et d'un deuxième élément 16 formant écrou, solidaire de la branche 9. On remarque sur la figure 3, représentant l'élément fileté 15 face à l'élément 16 formant écrou en position d'attente avant engagement, que l'élément fileté 15 coopère avec une bague 17 dans laquelle il est vissé. Cette bague est positivement bloquée sur la branche 10 portant cet élément.

Ainsi, l'élément fileté 15 est prêt à coopérer avec l'élément 16 formant écrou maintenu avec l'élément 15 suivant un alignement axial précis.

La bague 17 est logée dans une pièce 18 formant pontet de forme extérieure sensiblement cylindrique dans laquelle elle est rendue immobile par l'intermédiaire d'un moyen d'immobilisation 19 qui est, suivant un exemple de réalisation, un ergot en matériau élastique agissant par exemple par contact de pression sur la périphérie de la bague 17.

La pièce 18 est rendue solidaire de la face extérieure de la branche 10 par l'intermédiaire d'une liaison soudée 20.

Par ailleurs, la bague 17 comporte un frein 21, revêtant, la forme d'un anneau en élastomère, en prise avec le filetage de l'élément 15 formant vis.

Ce frein 21 permet de maintenir l'élément fileté 15 formant vis dans la bague 17 dans sa position d'attente, mais aussi d'entraîner en rotation la bague 17 lorsque l'élément 15 formant vis coopère avec l'élément 16 formant écrou.

Cette action est renforcée par l'action de la face intérieure 9a de la branche 9 de l'étrier 6 qui comprime le frein 21 contre le filetage de l'élément 15 formant vis.

En se reportant à la figure 1, on remarque que la bague 17 est de forme sensiblement ovale en section transversale.

Ainsi, lors de la rotation de l'élément fileté 15 dans l'élément 16 formant écrou, la bague 17 est entraînée en rotation comme il a été expliqué ci-dessus et l'une de ses parties protubérantes 17a ou 17b vient en contact contre la partie supérieure 1a de l'arbre 1 pour le maintenir en fond d'étrier lors de la phase de blocage. L'arbre 1 est alors parfaitement positionné dans l'étrier 6 et les deux éléments 4 et 8 sont parfaitement coaxiaux.

On notera que la partie intérieure 18a du pontet 18 est une rainure droite recevant la bague 17 dans une position où l'axe géométrique 17c des parties protubérantes 17a et 17b est toujours disposé de façon sensiblement parallèle à l'axe géométrique 1b de l'arbre 1. Cette configuration permet le passage de la bague 17 sur la partie supérieure 1a de l'arbre 1. Cette rainure, ainsi que le profil extérieur de la partie 18 ont été représentés en traits pointillés pour une meilleure compréhension des dessins.

Le fonctionnement du dispositif d'accouplement selon l'invention est le suivant : l'arbre 1 est engagé dans le logement 13 de l'étrier 6, guidé par les extrémités libres évasées 6a et 6b. L'élément fileté 15 est poussé par le moyen de montage automatique, par exemple un robot, pour venir en contact avec l'élément 16 formant écrou dans lequel il est ensuite vissé par l'intermédiaire de ce même moyen de montage, la bague 17 maintenant l'arbre 1 en position.

En se reportant à la figure 5 où un deuxième mode de réalisation selon l'invention est représenté, les positions de l'arbre 1 et de l'étrier 6 ont été interverties.

Ainsi, l'arbre 1 est rendu solidaire de l'élément inférieur 7 tandis que l'étrier 6 est rendu solidaire de l'élément supérieur 5, notamment de la partie inférieure 4 du cardan 5.

En se reportant maintenant à la figure 8, il est représenté un troisième mode de réalisation du dispositif d'accouplement selon l'invention. Les positions de l'étrier 6 de l'arbre 1 ont encore été modifiées.

En effet, l'étrier 6 est ici solidaire d'une partie supérieure 4b du cardan 5 formant désormais l'élément inférieur 7 de la colonne de direction 3 tandis que l'arbre 1 est rendu solidaire de l'arbre 3a, formant désormais l'élément supérieur de la colonne de direction 3.

On remarquera de même que les extrémités libres évasées 6a et 6b ont été disposées respectivement dans le prolongement des branches 10 et 9.

D'autre part, le pontet 18 est réalisé sous la forme d'une feuille rectangulaire, façonnée puis soudée sur la branche 9, dans laquelle est disposée la bague 17.

Aussi, l'élément fileté 15 est rendu solidaire de la branche 9 tandis que l'élément 16 formant écrou est rendu solidaire de la branche 10.

On précisera encore ici que la liaison de l'élément 16 formant écrou sur les branches 9 ou 10 peut être une liaison soudée, collée ou analogue, ou être une partie intégrante de l'une des branches de l'étrier.

Par ailleurs, le pontet 18 peut être fixé sur la branche qui le porte par l'intermédiaire d'une liaison soudée, collée, ou analogue, ou être vissé sur la branche qui le porte lorsqu'il est de forme extérieure sensiblement cylindrique comme dans le premier mode de réalisation de cette invention, visible sur les figures 1 à 4.

On peut de même remarquer que l'élément formant écrou ainsi que le pontet 18 peuvent être disposés sur les faces intérieures des branches qui les portent si celles-ci présentent un décrochement vers l'extérieur augmentant ainsi la largeur des branches. De même, le moyen d'immobilisation 19 peut être formé d'un matériau rigide, disposé dans un logement situé à la périphérie de la bague 17, et pouvant être brisé lors du déplacement de cette bague.

Bien entendu, l'invention n'est nullement limitée aux modes de réalisation décrits et illustrés et qui n'ont été donnés qu'à titre d'exemple.

**Revendications**

1. Dispositif d'accouplement de deux éléments d'une colonne de direction (3) par exemple, et comprenant un arbre (1) engageable dans une pièce en forme d'étrier (6) dont les branches (9, 10) peuvent être serrées contre l'arbre (1) à l'aide d'un boulon (14) comportant un élément fileté (15) formant vis solidaire de l'une des branches de l'étrier et un élément (16) formant écrou solidaire de l'autre branche de l'étrier, caractérisé en ce qu'il comporte en outre une bague (17) vissée sur ledit élément fileté (15) ainsi qu'un moyen d'immobilisation de ladite bague (17) sur la branche de l'étrier qui porte l'élément fileté (15), ledit moyen d'immobilisation (19) étant apte d'une part à bloquer positivement la bague sur ladite branche pour mettre ainsi l'élément fileté (15) en position d'attente avant engagement de l'arbre (1) dans l'étrier, et d'autre part à permettre le déblocage de ladite bague sous l'effet d'une poussée axiale exercée sur l'élément fileté (15), la bague (17) présentant une forme sensiblement ovale en section transversale pour prendre appui, sous l'effet de la rotation de l'élément fileté, lors du vissage, contre l'arbre (1) engagé dans l'étrier (6).

2. Dispositif selon la revendication 1, caractérisé en ce que la bague (17) précitée est logée dans une pièce (18) formant pontet solidaire de la branche de l'étrier portant l'élément fileté (15), le moyen d'immobilisation (19) précité étant prévu sur la bague.

3. Dispositif selon la revendication 2, caractérisé en ce que le moyen d'immobilisation (19) est constitué par un ergot en matériau élastique agissant par exemple par contact de pression sur la périphérie de la bague (17).

4. Dispositif selon l'une des revendications 1 à 3, caractérisé en ce que la bague (17) précitée est munie d'un frein (21) en prise avec le filetage de l'élément fileté (15).

5. Dispositif selon l'une des revendications 1 à 4, caractérisé en ce que les extrémités libres (6a, 6b) de l'étrier (6) sont évasées pour faciliter l'engagement de l'arbre (1).

6. Dispositif selon l'une des revendications 1 à 5, caractérisé en ce que l'arbre (1) précité est solidaire de l'élément supérieur de la colonne de direction tandis que l'étrier (6) précité est solidaire de l'élément inférieur de la colonne de direction ou inversement.

7. Véhicule automobile dont la colonne de direction comporte un dispositif d'accouplement selon l'une des revendications 1 à 6.

**Ansprüche**

1. Vorrichtung zur Kupplung zweier Elementen einer Lenksäule (3) zum Beispiel, mit einer in ein bügelförmiges Stück (6) einfügbaren Welle (1), dessen Schenkel (9,10) an die Welle (1) mit Hilfe eines Bolzens (14) anpressbar sind, der ein eine mit dem einem Schenkel des Bügels verbundene Schraube bildendes Gewindeelement (15) und ein eine mit dem anderen Schenkel des Bügels fest verbundene Mutter bildendes Element (16) aufweist, dadurch gekennzeichnet, dass sie ausserdem einen auf dem besagten Gewindeelement (15) aufgeschraubten Ring (17) sowie ein Mittel zum Festhalten des besagten Rings (17) an demjenigen Schenkel des Bügels, der das Gewindeelement (15) trägt, aufweist, wobei das besagte Festhaltemittel (19) fähig ist, einerseits den Ring an dem besagten Schenkel positiv festzusetzen, um somit das Gewindeelement (15) in einer Wartestellung vor Einfügung der Welle (1) in den Bügel zu bringen und andererseits das Entsperren des besagten Rings unter der Wirkung eines auf das Gewindeelement (15) ausgeübten axialen Schubes zu ermöglichen, wobei der Ring (17) eine im Querschnitt etwa ovale Gestalt aufweist, um unter der Wirkung des Drehens des Gewindeelementes während des Einschraubens in Anlage an die in den Bügel (6) eingeführte Welle (1) zu kommen.

2. Vorrichtung nach Anspruch 1, dadurch gekennzeichnet, dass der vorgenannte Ring (17) in einem mit das Gewindeelement (15) tragenden Schenkel des Bügels fest verbundenen, brückenartigen Stück (18) aufgenommen ist, wobei das vorgenannte Festhaltemittel (19) an dem Ring vorgesehen ist.

3. Vorrichtung nach Anspruch 2, dadurch gekennzeichnet, dass das Festhaltemittel (19) durch einen zum Beispiel durch Berührungsdruck auf den Umfang des Ringes (17) einwirkenden Stift aus elastischem Werkstoff gebildet wird.

4. Vorrichtung nach einem der Ansprüche 1 bis 3, dadurch gekennzeichnet, dass der vorgenannte Ring (17) mit einer mit dem Gewinde des Gewindeelementes (15) im Eingriff stehenden Sicherung (21) versehen ist.

5. Vorrichtung nach einem der Ansprüche 1 bis 4, dadurch gekennzeichnet, dass die freien Enden (6a, 6b) des Bügels (6) ausgeweitet sind, um das Einführen der Welle (1) zu erleichtern.

6. Vorrichtung nach einem der Ansprüche 1 bis 5, dadurch gekennzeichnet, dass die vorgenannte Welle (1) mit dem oberen Teil der Lenksäule, während der vorgenannte Bügel (6) mit dem unteren Teil der lenksäule oder umgekehrt fest verbunden ist.

7. Kraftfahrzeug, dessen Lenksäule eine Kupplungsvorrichtung gemäss einem der Ansprüche 1 bis 6 umfasst.

## Claims

1. Device for coupling two elements of for instance a steering column (3) and comprising a shaft (1) insertable into a yoke-shaped part (6) the legs (9, 10) of which may be clamped against the shaft (1) by mean ; of a bolt (14) comprising a threaded, screwforming element (15) made fast to one of the legs of the yoke and a nut-like element (16) made fast to the other leg of the yoke, characterized in that it moreover comprises a ring (17) screwed onto the said threaded element (15) as well as a means for holding the said ring (17) against motion on that leg of the yoke which carries the threaded element (15), the said immobilizing means (19) being adapted on the one hand to positively lock the ring onto the said leg for thus putting the threaded element (15) in a stand-by position before the insertion of the shaft (1) into the yoke and on the other hand to permit the unlocking of the said ring under the effect of an axial thrust exerted upon the threaded element (15), the ring (17) exhibiting a substantially oval shape in cross-section for bearing against the shaft (1) inserted into the yoke (6) under the effect of the rotation of the threaded element upon the screwing.

2. Device according to claim 1, characterized in that the aforesaid ring (17) is accommodated within a bridge-shaped part (18) made fast to the leg of the yoke carrying the threaded element (15), the aforesaid immobilizing means (19) being provided on the ring.

3. Device according to claim 2, characterized in that the immobilizing means (19) is constituted by a pin of elastic material acting for instance through pressure contact upon the periphery of the ring (17).

4. Device according to one of the claims 1 to 3, characterized in that the aforesaid ring (17) is provided with a lock (21) in engagement with the threading of the threaded element (15).

5. Device according to one of the claim ; 1 to 4, characterized in that the free ends (6a, 6b) of the yoke (6) are widened out to facilitate the engagement of the shaft (1).

6. Device according to one of the claims 1 to 5, characterized in that the aforesaid shaft (1) is made fast to the upper element of the steering column whereas the aforesaid yoke (6) is made fast to the lower element of the steering column or reversely.

7. Automotive vehicle the steering column of which comprises a coupling device according to one of the claims 1 to 6.

Fig. 2

Fig. 3

Fig. 4

EP 0 309 344 B1

Fig.5

Fig.6

Fig.7

Fig.10

Fig.9

Fig.8